# EUROPÄISCHE PATENTSCHRIFT

(11) **EP 3 114 359 B1**
(45) Veröffentlichungstag und Bekanntmachung des Hinweises auf die Patenterteilung: **26.02.2020**
(21) Anmeldenummer: 15715664.7
(22) Anmeldetag: 06.03.2015
(51) Int. Cl.: F16B 5/01, F16B 5/02

(54) **VORRICHTUNG ZUR VERBINDUNG EINES STRUKTURELEMENTS MIT EINEM HALTEELEMENT IN EINEM ABSTAND ZUEINANDER**
DEVICE FOR CONNECTING A STRUCTURAL ELEMENT WITH A HOLDING ELEMENT SPACED APART
DISPOSITIF SERVANT À ASSEMBLER UN ÉLÉMENT DE STRUCTURE À UN ÉLÉMENT DE MAINTIEN SELON UN ESPACEMENT L'UN PAR RAPPORT À L'AUTRE

(30) Priorität: 07.03.2014 AT 501672014
(43) Veröffentlichungstag der Anmeldung: 11.01.2017
(73) Patentinhaber: FACC AG, 4910 Ried im Innkreis (AT)
(72) Erfinder: HASELBERGER, Christoph, A-4782 St. Florian/Inn (AT); KAMMERER, Bernhard, A-4755 Zell an der Pram (AT)
(74) Vertreter: Sonn & Partner Patentanwälte
(86) Internationale Anmeldenummer: PCT/AT2015/050060
(87) Internationale Veröffentlichungsnummer: WO 2015/131218

(56) Entgegenhaltungen:
- EP-A2- 1 304 489
- WO-A1-82/00324

## Beschreibung

Die Erfindung betrifft eine Vorrichtung zur Verbindung eines Strukturelements, insbesondere aus einem faserverstärkten Kunststoffverbundwerkstoff, mit einem Halteelement in einem Abstand zueinander mittels einer Verbindungsschraube, mit einem Distanzausgleichelement, das eine Längsbohrung zum Durchtritt der Verbindungsschraube aufweist, und mit einem in der Längsbohrung angeordneten, durch einen Reibschluss mit der Verbindungsschraube verbindbaren Mitnahmeelement, so dass das Distanzausgleichelement durch Eindrehen der Verbindungsschraube in eine den Abstand zwischen dem Strukturelement und dem Halteelement überbrückende Anschlagstellung überführbar ist.

Weiters betrifft die Erfindung ein Strukturelement, insbesondere aus einem faserverstärkten Kunststoffverbundwerkstoff.

Die EP 1 304 489 A2 offenbart eine Toleranzausgleichsanordnung, welche zum Verspannen zweier Bauteile verwendet wird. Die Toleranzausgleichsanordnung besteht aus einer Schraube, einer Mutter und einer Ausgleichsbuchse. Die Ausgleichsbuchse hat ein Außengewinde, das mit einem passenden Innengewinde der Mutter verschraubbar ist, sowie einen Klemmabschnitt, der mit der Schraube eine reibschlüssige Verbindung eingehen kann. Dadurch wird erreicht, dass die Schraube beim Einschraubvorgang zunächst die Ausgleichsbuchse durch Reibschluss mitdreht und hierdurch entgegen der Einsteckrichtung aus der Mutter herausschraubt, bis sich die Ausgleichsbuchse nach erfolgtem Toleranzausgleich an das erste Bauteil anlegt. Danach wird die Schraube unter Überwindung des Reibschlusses mit der Mutter verschraubt, um die beiden Bauteile miteinander zu verspannen.

Die WO 82/00324 A1 offenbart eine Vorrichtung zum Verbinden einer Bodenplatte mit einem Basisaufbau, wobei die Bodenplatte und der Basisaufbau kongruente Befestigungslöcher aufweisen, in denen versenkbare Unterlegringe angeordnet sind. Mit einem Befestigungselement, welches in das jeweilige Befestigungsloch geschraubt wird, wird die Fußbodenplatte mit dem Basisaufbau verbunden, wobei durch die Unterlegringe ein definierter Abstand eingehalten wird.
Aus der DE 10 151 383 A1 ist eine Toleranzausgleichsanordnung zwischen zwei Bauteilen bekannt. Diese Anordnung weist eine Schraube auf, die durch die beiden Bauteile hindurch gesteckt. Der Schraubenkopf wird an dem ersten Bauteil abgestützt. Die Schraube wird in eine Mutter am anderen Bauteil eingeschraubt. Zudem ist eine Ausgleichsbuchse vorgesehen, die eine durchgehende Bohrung und ein Außengewinde passend zum Innengewinde der Mutter aufweist. Die Ausgleichsbuchse weist zudem einen Klemmabschnitt auf, mit welchem die Ausgleichsbuchse durch einen Reibschluss mit der Schraube verbindbar ist, wohingegen sie bei Überwindung des Reibschlusses relativ zur Schraube drehbar ist. Wenn die Schraube in die Ausgleichsbuchse eingesteckt und gedreht wird, kann die Ausgleichsbuchse aufgrund des Reibschlusses mitdrehen. Dadurch wird die Ausgleichsbuchse entgegen der Einsteckrichtung aus der Mutter zwecks Toleranzausgleich herausgeschraubt. Wenn sich die Ausgleichsbuchse an das erste Bauteil angelegt hat, wird diese mit einem Innengewinde zum Verspannen der beiden Bauteile verschraubt.

In den DE 10 2008 055 526 A1 und DE 10 2007 037 242 A1 sind weitere Vorrichtungen dieser Art beschrieben.

Die WO 2013150016 A1 offenbart ein Befestigungselement zur Verbindung zweier Bauteile mit selbsttätigem Toleranzausgleich zwischen den Bauteilen. Das Befestigungselement weist ein in einer Öffnung des einen Bauteils befestigbares Basiselement und ein über ein Außengewinde mit dem Innengewinde des Basiselements verschraubbares Verstellelement auf. Benachbart zum Innengewinde weist das Basiselement einen zweiten (Innen-)Gewindebereich zum Einschrauben einer Befestigungsschraube auf, welche eine der Gangrichtung des Gewindes entgegengesetzte Gangrichtung aufweist. Das Verstellelement weist an der Innenseite Mittschleppelemente auf, die beim Einschrauben der Schraube eine reibschlüssige Verbindung zwischen Schraube und Verstellelement herstellen. Beim Einschrauben der Schraube in den Gewindebereich wird das Verstellelement über die Mitschleppelemente mitgedreht, wobei in Abhängigkeit der Drehrichtung der Schraube das Verstellelement in axialer Richtung entweder vom Basiselement weg- oder zum Basiselement hinbewegt wird, wodurch der Toleranzausgleich erzielt werden kann. Gemäß einer alternativen Ausführung kann das Basiselement in der Öffnung des einen Bauteils festgeklebt werden.

Bei diesem Stand der Technik wird der Schraubenkopf der Schraube auf dem Bauteil abgestützt. Nachteiligerweise kann das Bauteil durch das Anzugsmoment der Schraube beschädigt werden. Dies ist insbesondere dann nachteilig, wenn das Bauteil aus einem Faserverbundwerkstoff gefertigt ist. Die bekannte Vorrichtung wäre zudem aufgrund von Platzproblemen für die Halterung von Composite-Bauteilen ungeeignet. Schließlich stört der vorspringende Schraubenkopf das Erscheinungsbild der sichtbaren Oberfläche des Bauteils.

Die bekannten Ausführungen sind daher für viele Anwendungen, insbesondere im Flugzeugbau, nicht geeignet. Für die Halterung von Strukturbauteilen aus Verbundwerkstoffen ist es aus Gründen der Stabilität und der Belastungssicherheit nachteilig, wenn die Verbindungsschraube mit dem Schraubenkopf an der Oberseite des Verbundwerkstoffs festgelegt wird. Darüber hinaus ist die Toleranzausgleichsanordnung beim Stand der Technik, vgl. beispielsweise die DE 101 51 383 A1, mit der Mutter des Halteelements verbunden. Eine solche Ausführung wäre jedoch für die Halterung von Composite-Bauteilen aufgrund von Platzproblemen ungeeignet bzw. ungünstig.
Demzufolge besteht die Aufgabe der vorliegenden Erfindung darin, eine Vorrichtung der eingangs angeführten Art anzugeben, mit welcher die Probleme des Standes der Technik gelindert bzw. vermieden werden. Die Erfindung setzt sich insbesondere zum Ziel, die Vorrichtung für einen Toleranzausgleich bei Strukturelementen aus Verbundwerkstoffen auszulegen.
Zur Lösung dieser Aufgabe ist eine Vorrichtung mit den Merkmalen von Anspruch 1 und ein Strukturelement mit den Merkmalen von Anspruch 12 vorgesehen. Bevorzugte Ausführungen sind in den abhängigen Ansprüchen angegeben.
Erfindungsgemäß ist daher das Distanzausgleichelement über eine Gewindeverbindung mit einem Einsatzteil verbunden, das einen innerhalb des Strukturelements anordenbaren Befestigungsabschnitt zur Verklebung mit dem Strukturelement aufweist.
Im montierten Zustand ist daher der Befestigungsabschnitt des Einsatzteils in einer Ausnehmung des Strukturelements aufgenommen und mittels einer Klebeverbindung an dem angrenzenden Material des Strukturelements unbeweglich fixiert. Vorzugsweise ragt das Einsatzteil daher nicht über die vom Halteelement abgewandte Außenfläche des Strukturelements hinaus. Der Befestigungsabschnitt ist daher bevorzugt im Wesentlichen vollständig in das Strukturelement integriert, welches bevorzugt ein Paneel aus einem Verbundwerkstoff aufweist. An dem Strukturelement mit dem Composite-Paneel kann zudem ein Oberflächenmaterial, insbesondere ein Furnier, vorgesehen sein. Das Einsatzteil weist am Befestigungsabschnitt eine Haftfläche zur Verklebung mit einer entsprechenden, die Ausnehmung des Strukturelements begrenzenden Klebefläche des Strukturelements auf. Die erfindungsgemäße Ausführung hat insbesondere den Vorteil, dass ein punktueller Lasteintrag in das Strukturelements, welcher beim Stand der Technik durch die Abstützung der Verbindungsschraube an der Außenseite des Bauteils verursacht wird, vermieden wird. Zudem wird eine besonders belastbare Ausführung geschaffen, welche hohen Sicherheitsstandards genügt. Darüber hinaus ist von Vorteil, dass die sichtbare Oberfläche des Strukturelements durch die Anordnung des Distanzausgleichselements kaum beeinträchtigt wird, da der beim Stand der Technik vorspringende Schraubenkopf fehlt. Durch die Verbindung des Distanzausgleichelements mit dem Einsatzteil - im Unterschied zur Verbindung mit der Mutter des Halteelements beim Stand der Technik - kann zudem eine besonders platzsparende Ausführung erzielt werden, welche insbesondere für Strukturelemente aus faserverstärkten Kunststoffverbundwerkstoffen (Composite-Bauteilen) vorteilhaft ist. Bei dieser Ausführung kann das Halteelement mit einer vergleichsweise kleinen Mutter ausgestattet sein. Die erfindungsgemäße Vorrichtung kann daher mit besonderen Vorteilen zur Montage von Strukturelementen aus faserverstärktem Kunststoffmaterial genutzt werden, welche insbesondere eine Wandstärke bzw. Dicke von 5 bis 15 mm aufweisen. Um den Abstand zwischen dem Strukturelement und dem Halteelement zu überbrücken, ist es günstig, wenn das Distanzausgleichelement beim Eindrehen der Verbindungsschraube von einer Abstandsstellung in Richtung des Halteelements in die Anschlagstellung am Halteelement überführbar ist. Bei dieser Ausführung wird daher das Distanzausgleichelement beim Eindrehen der Verbindungsschraube aus dem Einsatzteil herausgeschraubt. Demnach wird die Drehbewegung der Verbindungsschraube in eine Verlängerung der Vorrichtung umgesetzt, wobei das die Anschlagfläche bildende freie Ende des Distanzausgleichelements in Richtung des Halteelements wandert. Bei Erreichen der Anschlagstellung wird der Reibschluss zwischen der Verbindungsschraube und dem Mitnahmeelement überwunden, so dass die Verbindungsschraube gegenüber dem Mitnahmeelement verdreht werden kann. Anschließend kann die Verbindungsschraube an einem Gewinde des Halteelements fixiert werden.
Zur Erzielung einer stabilen Klebeverbindung zwischen dem Einsatzteil und dem Strukturelement weist das Einsatzteil am Befestigungsabschnitt zwei zwischen den Außenflächen des Strukturelements anordenbaren Befestigungsflansche zur Verklebung des Einsatzteils mit dem Strukturelement auf, welche sich bevorzugt im Wesentlichen senkrecht zur Längsachse der Längsbohrung erstrecken. In der Fertigung werden die Befestigungsflansche mittels einer Klebstoffverbindung an dem Strukturelement fixiert, wodurch ein inniger Zusammenhalt erzielt wird. Die Anordnung der Befestigungsflansche erleichtert einerseits den Auftrag des Klebstoffs. Andererseits bewirken die Befestigungsflansche eine besonders zuverlässige Sicherung gegen im Betrieb an der Vorrichtung angreifende Torsionskräfte. Bevorzugt ist ein Befestigungsflansch im Wesentlichen bündig mit einer Oberfläche eines Composite-Paneels des Strukturelements angeordnet.

Erfindungsgemäß weist das Einsatzteil am Befestigungsabschnitt zwei insbesondere parallel und in einem Abstand zueinander angeordnete Befestigungsflansche auf. Hiermit kann eine besonders stabile Anordnung des Einsatzteils innerhalb der Ausnehmung des Strukturelements erzielt werden. Die Befestigungsflansche sind hierbei bevorzugt im Wesentlichen vollständig zwischen den Außenflächen des Strukturelements angeordnet, wobei zumindest einer der Befestigungsflansche günstigerweise im Wesentlichen bündig mit einer Oberfläche eines Verbundwerkstoff-Paneels des Strukturelements abschließt. Zwischen den Befestigungsflanschen ist ein Hohlraum zur Aufnahme des Klebstoffs ausgebildet, mit welchem das Einsatzteil in dem Strukturelement befestigt wird. Zur Halterung des Strukturelements kann zunächst im Strukturelement eine Bohrung mit dem Außendurchmesser der Befestigungsflansche eingebracht werden. Nach dem Einsetzen des Einsatzteils kann der ringförmige Hohlraum zwischen den Befestigungsflanschen mit Klebstoff gefüllt werden. Der Klebstoff zwischen den Befestigungsflanschen verbindet sich mit dem Material, insbesondere Verbundwerkstoffmaterial, des Strukturelements.
Zum Verkleben des Einsatzteils mit dem Strukturelement ist es günstig, wenn zumindest einer der Befestigungsflansche zumindest eine Öffnung, insbesondere zumindest eine Einkerbung an einem äußeren Rand des Befestigungsflansches, zum Einbringen des Klebstoffs zwischen die Befestigungsflansche aufweist. Bevorzugt weist einer der Befestigungsflansche zwei gegenüberliegende Einkerbungen zum Einfüllen des Klebstoffs auf. Je nach Ausführung können auch beide Befestigungsflansche jeweils zumindest eine Öffnung zum Einbringen des Klebstoffes aufweisen.

Um die maximale Verstellbarkeit der Vorrichtung festzulegen, ist es günstig, wenn Anschläge zur Begrenzung der Bewegung des Distanzausgleichelements in axialer Richtung relativ zu dem Einsatzteil vorgesehen sind. Demnach kann die Vorrichtung durch Verdrehen der Verbindungsschraube zwischen einem kürzeren Zustand, in welchem das Distanzausgleichelement weniger weit aus dem Einsatzteil vorragt, und einem längeren Zustand, in welchem das Distanzausgleichelement weiter aus dem Einsatzteil vorragt, verstellt werden, wobei die Anschläge eine Verstellung des Distanzausgleichelements über das Erreichen des kürzeren bzw. längeren Zustands hinaus blockieren.

Aus fertigungstechnischen Gründen ist zu bevorzugen, wenn das Distanzausgleichelement eine Aufnahmeöffnung zur lösbaren Aufnahme eines Anschlagelements aufweist, mit welchem im montierten Zustand ein Herausdrehen des Distanzausgleichelements aus dem Einsatzteil blockierbar ist. Durch die lösbare Anordnung des Anschlagelements in der Aufnahmeöffnung kann die Vorrichtung auf besonders einfache Weise montiert bzw. demontiert werden.

Bei dieser Ausführung ist es günstig, wenn als Anschlagelement ein insbesondere U-förmiges Bügelelement vorgesehen ist, welches im montierten Zustand in die Längsbohrung des Distanzausgleichelements ragt. Das Bügelelement ist mit den Enden in die entsprechenden Aufnahmeöffnungen des Distanzausgleichelements einschiebbar. Im montierten Zustand blockiert das Bügelelement eine Verstellung des Distanzausgleichelements über das Erreichen des die maximale Länge aufweisenden zweiten Zustands der Vorrichtung hinaus. Hinsichtlich einer besonders kostengünstigen und konstruktiv einfachen Ausführung kann als Bügelelement ein Draht, insbesondere mit einem kreisförmigen Querschnitt, vorgesehen sein, wobei die Ausnehmungen des Distanzausgleichelements entsprechend ausgebildet sind. Das Bügelelement ist vorzugsweise elastisch verformbar, so dass das Bügelelement im montierten Zustand durch elastische Verformung der durch die Aufnahmeöffnungen gesteckten Enden des Bügelelements gegen ein unbeabsichtigtes Herauslösen sicherbar ist.

Zur drehfesten Verbindung zwischen der Verbindungsschraube und dem Distanzausgleichelement beim Einschrauben der Verbindungsschraube ist es günstig, wenn als Mitnahmeelement ein mittels der Verbindungsschraube elastisch verformbares Federelement vorgesehen ist. Im Eingriff mit der Verbindungsschraube wird das Federelement elastisch verformt, wobei die Rückstellkräfte des Federelements einen Reibschluss zwischen der Verbindungsschraube und dem Federelement bewirken. Bei Erreichen der Anschlagstellung am Halteelement treten Reibkräfte zwischen der Anschlagfläche des Distanzausgleichelements und dem Halteelement auf, so dass bei einem weiteren Verdrehen der Verbindungsschraube der Reibschluss zwischen der Verbindungsschraube und dem Federelement überwunden wird. In diesem Zustand kann die Verbindungsschraube in dem entsprechenden Gewinde des Halteelements festgelegt werden.

Um die Mitnahme des Distanzausgleichelements beim Eindrehen der Verbindungsschraube zuverlässig gewährleisten zu können, ist es von Vorteil, wenn das Federelement in einem Halteabschnitt des Distanzausgleichelements drehfest und in axialer Richtung unbeweglich angeordnet ist. Zu diesem Zweck ist es günstig, wenn das Federelement und die Längsbohrung des Distanzausgleichelements unterschiedliche Querschnittsformen aufweisen. Weiters kann der Halteabschnitt eine andere Querschnittsform als ein angrenzender Abschnitt der Längsbohrung aufweisen.

Zur Erzielung der reibschlüssigen Verbindung zwischen der Verbindungsschraube und dem Distanzausgleichelement ist es günstig, wenn das Federelement zwei mittels der Verbindungsschraube spreizbare, insbesondere im Wesentlichen parallel zueinander angeordnete Spreizschenkel aufweist, welche über einen Verbindungsabschnitt miteinander verbunden sind. Die Spreizschenkel können im Eingriff mit der Verbindungsschraube im Wesentlichen senkrecht zur Hauptebene der Spreizschenkel nach außen gedrückt werden, wobei die Rückstellkräfte der Spreizschenkel einen Reibschluss zwischen der Verbindungsschraube und dem Federelement bewirken. Der Verbindungsabschnitt weist bevorzugt zwei in einem stumpfen Winkel zueinander angeordnete Verbindungsschenkel auf, mit welchen eine Verformung der Spreizabschnitte erleichtert wird.

Gemäß einer bevorzugten Ausführung ist als Einsatzteil ein Buchsenelement vorgesehen, welches ein Innengewinde zur Verbindung mit einem entsprechenden Außengewinde des Distanzausgleichelements aufweist. Vorteilhafterweise ist die Vorrichtung dadurch in der Anschlagstellung am Halteelement gegen Kräfte in Längsrichtung des Distanzausgleichelements blockiert, so dass die Vorrichtung im Betrieb zuverlässig in der Anschlagstellung gehalten wird.

Bevorzugt weist das Distanzausgleichelement an dem einen Ende einen Fußteil zur Anlage am Halteelement und an dem anderen Ende einen Kopfteil mit dem Außengewinde auf, wobei der Fußteil und der Kopfteil über einen Längsabschnitt mit einer im Vergleich zum Fußteil und Kopfteil geringeren Querschnittsfläche miteinander verbunden sind. Aus fertigungstechnischen Gründen ist bevorzugt, wenn das Distanzausgleichelement, insbesondere dessen Kopfteil, Fußteil und Verbindungsabschnitt, einstückig hergestellt ist.

Das erfindungsgemäße Strukturelement weist eine Ausnehmung auf, in welche die zuvor beschriebene Vorrichtung eingeklebt ist. Demnach ist der Befestigungsabschnitt des Einsatzteils innerhalb des Strukturelements angeordnet. Das Strukturelement kann auch mehrere Ausnehmungen aufweisen, welche mit einer entsprechenden Anzahl der zuvor beschriebenen Vorrichtungen zum Distanzausgleich ausgestattet sind. Mit Hilfe der Klebeverbindungen kann eine besonders stabile, dauerhafte Verbindung zwischen dem Einsatzteil und dem Strukturelement geschaffen werden.

Wenn der Befestigungsabschnitt des Einsatzteils im Wesentlichen vollständig innerhalb der Ausnehmung des Strukturelements angeordnet ist, kann die Vorrichtung vorteilhafterweise in das Strukturelement integriert werden.

Die Vorteile der Erfindung können insbesondere in solchen Anwendungen genutzt werden, bei welchen ein Plattenelement, insbesondere ein Paneel für Flugzeugmonumente wie Staufächer, Küchen, Toiletten, Waschräume sowie Flugzeugverkleidungselemente in Passagierkabinen vorgesehen ist, wobei der Befestigungsabschnitt des Einsatzteils zwischen den Außenflächen des Plattenelements angeordnet ist. Solche plattenförmigen Strukturelemente können im Flugzeugbau in verschiedensten Anwendungen vorkommen.

Bevorzugt weist das Halteelement eine Mutter, insbesondere eine Klippmutter, zur Verbindung mit der Verbindungsschraube auf, wobei die Mutter aufgrund der Verbindung des Distanzausgleichelements mit dem Einsatzteil vorteilhafterweise besonders klein ausgeführt sein kann.

Die Erfindung wird nachstehend anhand von in der Zeichnung dargestellten bevorzugten Ausführungsbeispielen, auf die sie jedoch nicht beschränkt sein soll, noch weiter erläutert. Im Einzelnen zeigen in der Zeichnung:
Fig. 1 eine Querschnittsansicht eines erfindungsgemäßen Strukturelements, welches mit Hilfe einer erfindungsgemäßen Vorrichtung, bestehend aus einem im Strukturelement verklebten Einsatzteil und einem herausschraubbaren Distanzausgleichelement, an einem Halteelement befestigbar ist, wobei das Distanzausgleichelement in einer Abstandsstellung vor dem Einschrauben einer Verbindungsschraube dargestellt ist;
Fig. 2 eine Fig. 1 entsprechende Querschnittsansicht des Strukturelements, wobei das Distanzausgleichelement durch Eindrehen der Verbindungsschraube in eine Anschlagstellung am Halteelement gebracht wurde;
Fig. 3 eine schaubildliche Ansicht einer gegenüber Fig. 1, 2 geringfügig abgewandelten Vorrichtung zur Verbindung des Strukturelements mit dem Halteelement;
Fig. 4a einen Längsschnitt der erfindungsgemäßen Vorrichtung im kürzeren Zustand entsprechend der in Fig. 1 gezeigten Abstandsstellung und Fig. 4b einen Längsschnitt der erfindungsgemäßen Vorrichtung in einem längeren Zustand entsprechend der in Fig. 2 gezeigten Anschlagstellung;
Fig. 5 eine Ansicht der erfindungsgemäßen Vorrichtung in Richtung einer Längsbohrung des Distanzausgleichelements, wobei in der Längsbohrung ein Mitnahmeelement zur reibschlüssigen Verbindung zwischen der Verbindungsschraube und dem Distanzausgleichelement angeordnet ist;
Fig. 6 eine Ansicht des Mitnahmeelements gemäß Fig. 5, welches als U-förmiges Bügelelement ausgebildet ist; und
Fig. 7 eine Seitenansicht des Mitnahmeelements gemäß Fig. 5, 6.

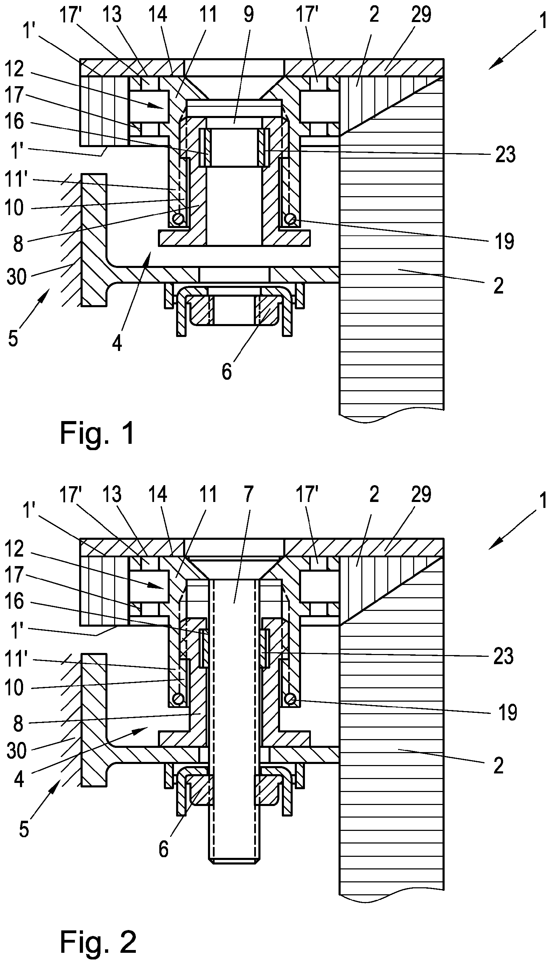

Fig. 1 zeigt ein Strukturelement 1, welches im Flugzeugbau für einen Staukasten verwendet wird. Das Strukturelement 1 ist insbesondere aus einem faserverstärkten Kunststoffverbundwerkstoff gefertigt. In der gezeigten Ausführung weist das Strukturelement 1 zwei rechtwinkelig zueinander angeordnete Plattenelemente 2 auf. An der Oberseite des einen Plattenelements 2 ist in Fig. 1, 2 ein Oberflächenmaterial 29, beispielsweise ein Furnier, angedeutet. Weiters ist eine Vorrichtung 4 zur Verbindung des Strukturelements 1 mit einem Halteelement 5 vorgesehen, welches an einem (in der Zeichnung schematisch ersichtlichen) Strukturkörper 30 angebracht ist. Das Halteelement 5 ist in der gezeigten Ausführung als Halteklammer bzw. Bracket ausgebildet, in welcher eine Klippmutter 6 mit einem Gewinde zum Einschrauben einer Verbindungsschraube 7 aufgenommen ist.

Wie aus Fig. 1 weiters ersichtlich, weist die Vorrichtung 4 ein Distanzausgleichelement 8 auf, das eine zentrale Längsbohrung 9 zum Durchtritt der Verbindungsschraube 7 aufweist. Das Distanzausgleichelement 8 ist über eine Gewindeverbindung 10 mit einem Einsatzteil 11 verdrehbar verbunden. Zu diesem Zweck weist das Einsatzteil 11 ein Innengewinde auf, in welches ein entsprechendes Außengewinde des Distanzausgleichelements 8 passt. Als Einsatzteil 11 ist in der gezeigten Ausführung ein Buchsenelement 11' vorgesehen, welches das Innengewinde zur Verbindung mit dem entsprechenden Außengewinde des Distanzausgleichelements 8 aufweist.

Wie aus Fig. 1 weiters ersichtlich, weist das Einsatzteil 11 einen Befestigungsabschnitt 12 auf, welcher vollständig innerhalb einer Ausnehmung 13 des Strukturelements 1 angeordnet ist. Die Ausnehmung 13 wird durch Ausfräsen des Plattenelements 2 erzeugt. Der Befestigungsabschnitt 12 des Einsatzteils 11 ist mittels einer Klebeverbindung 14 mit dem Strukturelement 1 verbunden.

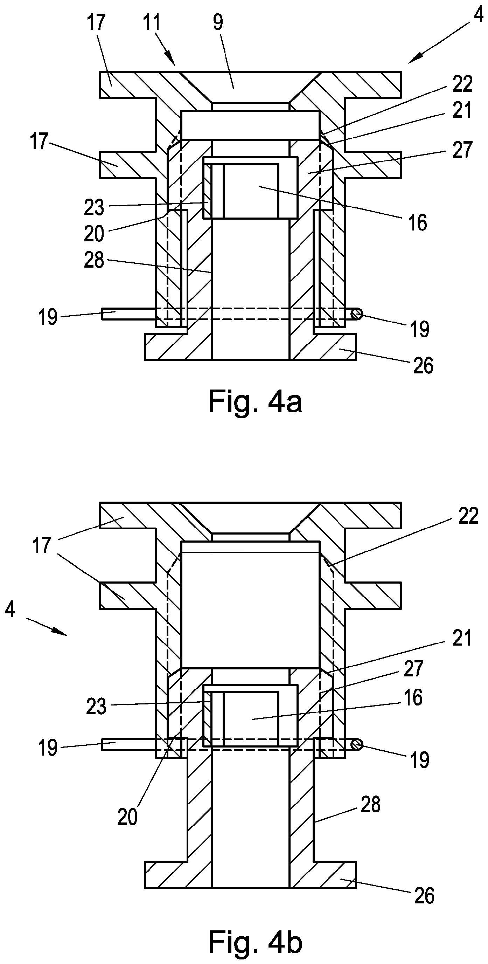

Wie aus Fig. 1, 2 weiters ersichtlich, ist in der Längsbohrung 9 ein Mitnahmeelement 16 angeordnet, welches beim Eindrehen der Verbindungsschraube 7 reibschlüssig mit der Verbindungsschraube 7 in Eingriff gebracht wird. Auf diese Weise kann das Distanzausgleichelement 8 durch Eindrehen der Verbindungsschraube 7 von einer Abstandsstellung (vgl. Fig. 1) in eine den Abstand zwischen dem Strukturelement 1 und dem Halteelement 5 überbrückende Anschlagstellung (vgl. Fig. 2) überführt werden. In der gezeigten Ausführung wird das Distanzausgleichelement 8 beim Eindrehen der Verbindungsschraube 7 aus dem Einsatzteil 11 herausgeschraubt. Dabei wird die Vorrichtung 4 von einem der Abstandsstellung entsprechenden kürzeren Zustand (vgl. Fig. 4a), in welchem das Distanzausgleichelement 8 weniger weit aus dem Einsatzteil 11 vorragt, in Richtung des Halteelements 5 in einen der Anschlagstellung am Halteelement 5 entsprechenden längeren Zustand (vgl. Fig. 4b), in welchem das Distanzausgleichelement 8 weiter aus dem Einsatzteil 11 vorragt, überführt.

Wie aus Fig. 1, 2 weiters ersichtlich, weist das Einsatzteil 11 am Befestigungsabschnitt 12 zwei Befestigungsflansche 17 auf, welche zur Verklebung mit dem Strukturelement 1 eingerichtet sind. Die parallel und in einem Abstand zueinander angeordneten Befestigungsflansche 17 sind hierbei im Wesentlichen senkrecht zur Längsachse der Längsbohrung 9 bzw. im Wesentlichen senkrecht zur Hauptebene des zugehörigen Plattenelements 2 erstreckt. In der Ausführung gemäß Fig. 1, 2 weisen beide Befestigungsflansche 17 je zwei Öffnungen 17'auf, durch welche der Kleber in das Volumen zwischen den Befestigungsflanschen 17 gefüllt werden kann. Demnach ist der Einsatzteil 11 seitlich, über die Klebeverbindung zwischen den Befestigungsflanschen 17 mit dem Strukturelement 1 verbunden. Die Befestigungsflansche 17 sind zwischen den Außenflächen 1' des Strukturelements 1 angeordnet. Demnach ist der Befestigungsabschnitt 12 vollständig in das Strukturelement 1 integriert.

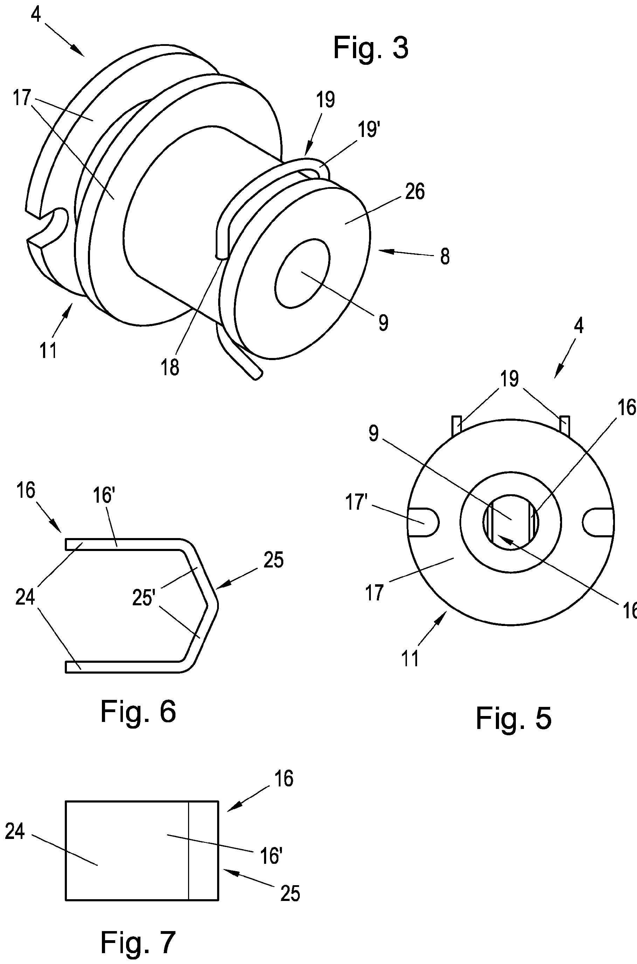

In den Fig. 3 bis 7 ist eine weitere Ausführungsform gezeigt, welche sich im Wesentlichen dadurch von jener der Fig. 1, 2 unterscheidet, dass nur der obere Befestigungsflansch 17 Öffnungen 17' zum Einbringen des Klebers aufweist. Darüber hinaus sind die Öffnungen 17' gemäß Fig. 3 bis 7 als gegenüberliegende Einkerbungen an den äußeren Rändern des Befestigungsflansches 17 ausgebildet. Hinsichtlich der übrigen Merkmale entspricht die Ausführung der Fig. 3 bis 7 jener der Fig. 1, 2, so dass diesbezüglich auf die vorstehenden Erläuterungen verwiesen werden kann.

Wie aus Fig. 3, 4 ersichtlich, sind Anschläge zur Begrenzung der Bewegung des Distanzausgleichelements 8 in axialer Richtung relativ zu dem Einsatzteil 11 vorgesehen. Zu diesem Zweck weist das Distanzausgleichelement 8 einerseits Aufnahmeöffnungen 18 zur lösbaren Aufnahme eines Anschlagelements 19 auf, mit welchem im montierten Zustand ein Herausdrehen des Distanzausgleichelements 8 aus dem Einsatzteil 11 verhindert wird. Als Anschlagelement 18 ist in der gezeigten Ausführung ein U-förmiges Bügelelement 19' vorgesehen, welches mit den Enden in die gegenüberliegenden Aufnahmeöffnungen 18 des Distanzausgleichelements 8 gesteckt wird. Im montierten Zustand springt das Bügelelement 19' in die Längsbohrung 9 des Distanzausgleichelements 8 vor, so dass eine Bewegung des Distanzausgleichelements 8 über eine an einer Anschlagfläche 20 des Distanzausgleichelements 8 anschlagende Anschlagposition hinaus blockiert wird. Das Bügelelement 19' ist aus einem elastischen Material gefertigt, so dass die vorstehenden Enden im montierten Zustand umbiegbar sind (vgl. Fig. 3). Auf diese Weise kann ein unbeabsichtigtes Herauslösen des Bügelelements 19' verhindert werden. Darüber hinaus weist das Distanzausgleichelement 8 an dem im Einsatzteil 11 aufgenommenen Ende einen Anschlag 21 auf, welcher in dem Zustand der Vorrichtung 4 mit der geringsten Längserstreckung entsprechend der Abstandsstellung gemäß Fig. 1 an einem entsprechenden Anschlag 22 des Einsatzteils 11 anschlägt.

Wie aus Fig. 3 bis 6 ersichtlich, ist als Mitnahmeelement 16 ein Federelement 16' vorgesehen, das im Eingriff mit der Verbindungsschraube 7 elastisch verformbar ist. Das Federelement 16' ist in einem Halteabschnitt 23 des Distanzausgleichelements 8 drehfest und in axialer Richtung unbeweglich angeordnet. In der gezeigten Ausführung weist das Federelement 16' zwei im Wesentlichen parallel zueinander angeordnete Spreizschenkel 24 auf, welche über einen Verbindungsabschnitt 25 miteinander verbunden sind. Der Verbindungsabschnitt 25 weist zwei Verbindungsschenkel 25' auf, welche in einem stumpfen Winkel zueinander angeordnet sind. Beim Eindrehen der Verbindungsschraube 7 werden die Spreizschenkel 24 auseinander gedrückt, wodurch ein Reibschluss zwischen der Verbindungsschraube 7 und dem Federelement 16' erzeugt wird. Dadurch wird das Distanzausgleichelement 8 beim Eindrehen der Verbindungsschraube 7 in die Anschlagstellung am Halteelement 5 mitgenommen.

Wie aus Fig. 1 bis 4 ersichtlich, weist das Distanzausgleichelement 8 an dem einen Ende einen Fußteil 26 zur Anlage am Halteelement 5 und an dem anderen Ende einen Kopfteil 27 mit dem Außengewinde zur Verbindung mit dem Einsatzteil 11 auf. Der Fußteil 26 und der Kopfteil 27 sind über einen Längsabschnitt 28 mit einer im Vergleich dazu geringeren Querschnittsfläche miteinander verbunden.

## Patentansprüche

1. Vorrichtung (4) zur Verbindung eines Strukturelements (1), insbesondere aus einem faserverstärkten Kunststoffverbundwerkstoff, mit einem Halteelement (5) in einem Abstand zueinander mittels einer Verbindungsschraube (7), mit einem Distanzausgleichelement (8), das eine Längsbohrung (9) zum Durchtritt der Verbindungsschraube (7) aufweist, und mit einem in der Längsbohrung (9) angeordneten, durch einen Reibschluss mit der Verbindungsschraube (7) verbindbaren Mitnahmeelement (16), sodass das Distanzausgleichelement (8) durch Eindrehen der Verbindungsschraube (7) in eine den Abstand zwischen dem Strukturelement (1) und dem Halteelement (5) überbrückende Anschlagstellung überführbar ist, wobei das Distanzausgleichelement (8) über eine Gewindeverbindung (10) mit einem Einsatzteil (11) verbunden ist, das einen innerhalb des Strukturelements (1) anordenbaren Befestigungsabschnitt (12) zur Verklebung mit dem Strukturelement (1) aufweist, **dadurch gekennzeichnet, dass** das Einsatzteil (11) am Befestigungsabschnitt (12) zwei in einem Abstand zueinander angeordnete Befestigungsflansche (17) zur Verklebung des Einsatzteils (11) mit dem Strukturelement (1) aufweist.

2. Vorrichtung (4) nach Anspruch 1, **dadurch gekennzeichnet, dass** das Distanzausgleichelement (8) beim Eindrehen der Verbindungsschraube (7) von einer Abstandsstellung in Richtung des Halteelements (5) in die Anschlagstellung am Halteelement (5) überführbar ist.

3. Vorrichtung (4) nach Anspruch 1 oder 2, **dadurch gekennzeichnet, dass** die zwei Befestigungsflansche (17) jeweils im Wesentlichen senkrecht zur Längsachse der Längsbohrung (9) erstreckt sind.

4. Vorrichtung (4) nach einem der Ansprüche 1 bis 3, **dadurch gekennzeichnet, dass** zumindest einer der Befestigungsflansche (17) zumindest eine Öffnung (17'), insbesondere zumindest eine Einkerbung an einem äußeren Rand des Befestigungsflansches (17), zum Einbringen des Klebstoffs zwischen die Befestigungsflansche (17) aufweist.

5. Vorrichtung (4) nach einem der Ansprüche 1 bis 4, **dadurch gekennzeichnet, dass** Anschläge zur Begrenzung der Bewegung des Distanzausgleichelements (8) in axialer Richtung relativ zu dem Einsatzteil (11) vorgesehen sind.

6. Vorrichtung (4) nach Anspruch 5, **dadurch gekennzeichnet, dass** das Distanzausgleichelement (8) eine Aufnahmeöffnung (18) zur lösbaren Aufnahme eines Anschlagelements (19) aufweist, mit welchem im montierten Zustand ein Herausdrehen des Distanzausgleichelements (8) aus dem Einsatzteil (11) blockierbar ist, wobei als Anschlagelement (19) vorzugsweise ein insbesondere U-förmiges Bügelelement (19') vorgesehen ist, welches im montierten Zustand in die Längsbohrung (9) des Distanzausgleichelements (8) ragt.

7. Vorrichtung (4) nach einem der Ansprüche 1 bis 6, **dadurch gekennzeichnet, dass** als Mitnahmeelement (16) ein mittels der Verbindungsschraube (7) elastisch verformbares Federelement (16') vorgesehen ist.

8. Vorrichtung (4) nach Anspruch 7, **dadurch gekennzeichnet, dass** das Federelement (16') in einem Halteabschnitt (23) des Distanzausgleichelements (8) drehfest und in axialer Richtung unbeweglich angeordnet ist.

9. Vorrichtung (4) nach Anspruch 7 oder 8, **dadurch gekennzeichnet, dass** das Federelement (16') zwei mittels der Verbindungsschraube (7) spreizbare, insbesondere im Wesentlichen parallel zueinander angeordnete Spreizschenkel (24) aufweist, welche über einen Verbindungsabschnitt (25) miteinander verbunden sind.

10. Vorrichtung (4) nach einem der Ansprüche 1 bis 9, **dadurch gekennzeichnet, dass** als Einsatzteil (11) ein Buchsenelement (11') vorgesehen ist, welches ein Innengewinde zur Verbindung mit einem entsprechenden Außengewinde des Distanzausgleichelements (8) aufweist.

11. Vorrichtung (4) nach Anspruch 10, **dadurch gekennzeichnet, dass** das Distanzausgleichelement (8) an dem einen Ende einen Fußteil (26) zur Anlage am Halteelement (5) und an dem anderen Ende einen Kopfteil (27) mit dem Außengewinde aufweist, wobei der Fußteil (26) und der Kopfteil (27) über einen Längsabschnitt (28) mit einer im Vergleich zum Fußteil (26) und Kopfteil (27) geringeren Querschnittsfläche miteinander verbunden sind.

12. Strukturelement (1), insbesondere aus einem faserverstärkten Kunststoffverbundwerkstoff, **dadurch gekennzeichnet, dass** das Strukturelement (1) zumindest eine Ausnehmung (13) aufweist, in welche eine Vorrichtung (4) nach einem der Ansprüche 1 bis 11 eingeklebt ist.

13. Strukturelement (1) nach Anspruch 12, **dadurch gekennzeichnet, dass** der Befestigungsabschnitt (12) des Einsatzteils (11) im Wesentlichen vollständig innerhalb der Ausnehmung (13) des Strukturelements (1) angeordnet ist.

14. Strukturelement (1) nach Anspruch 12 oder 13, **dadurch gekennzeichnet, dass** ein Plattenelement (2), insbesondere ein Paneel für Flugzeugmonumente wie Staufächer, Küchen, Toiletten, Waschräume sowie Flugzeugverkleidungselemente in Passagierkabinen, vorgesehen ist, wobei der Befestigungsabschnitt (12) des Einsatzteils (11) zwischen den Außenflächen (1') des Plattenelements (2) angeordnet ist.

15. Strukturelement (1) nach einem der Ansprüche 12 bis 14, **dadurch gekennzeichnet, dass** das Halteelement (5) eine Mutter, insbesondere eine Klippmutter (6), zur Verbindung mit der Verbindungsschraube (7) aufweist.

## Claims

1. Device (4) for connecting a structural element (1), in particular made of a fibre-reinforced plastic composite material, to a holding element (5) at a spacing from one another by means of a connecting screw (7), the device comprising a distance compensation element (8) which has a longitudinal bore (9) for the passage of the connecting screw (7), and comprising an entraining element (16) which is arranged in the longitudinal bore (9) and can be connected to the connecting screw (7) by means of a friction fit, such that the distance compensation element (8) can be transferred into a stop position which bridges the spacing between the structural element (1) and the holding element (5) by the connecting screw (7) being screwed in,
the distance compensation element (8) being connected by a threaded connection (10) to an insert part (11) which has a fastening portion (12) for gluing to the structural element (1), which portion can be arranged within the structural element (1), **characterised in that** the insert part (11) has two fastening flanges (17) on the fastening portion (12), which flanges are arranged spaced apart from one another and are for gluing the insert part (11) to the structural element (1).

2. Device (4) according to claim 1, **characterised in that** the distance compensation element (8) can be transferred from a spaced-apart position in the direction of the holding element (5) into the stop position against the holding element (5) when the connecting screw (7) is screwed in.

3. Device (4) according to either claim 1 or claim 2, **characterised in that** the two fastening flanges (17) each extend substantially perpendicularly to the longitudinal axis of the longitudinal bore (9).

4. Device (4) according to any of claims 1 to 3, **characterised in that** at least one of the fastening flanges (17) has at least one opening (17'), in particular at least one notch on an outer edge of the fastening flange (17), for introducing the adhesive between the fastening flanges (17).

5. Device (4) according to any of claims 1 to 4, **characterised in that** stops are provided for limiting the movement of the distance compensation element (8) in the axial direction relative to the insert part (11).

6. Device (4) according to claim 5, **characterised in that** the distance compensation element (8) has a receiving opening (18) for releasably receiving a stop element (19) by means of which, in the assembled state, the distance compensation element (8) can be blocked from unscrewing from the insert part (11), a bracket element (19') preferably being provided as the stop element (19), which bracket element is in particular U-shaped and projects into the longitudinal bore (9) of the distance compensation element (8) in the assembled state.

7. Device (4) according to any of claims 1 to 6, **characterised in that** a spring element (16') which can be elastically deformed by means of the connecting screw (7) is provided as the entraining element (16).

8. Device (4) according to claim 7, **characterised in that** the spring element (16') is arranged in a holding portion (23) of the distance compensation element (8) so as to be non-rotatable and immovable in the axial direction.

9. Device (4) according to either claim 7 or claim 8, **characterised in that** the spring element (16') has two spreading limbs (24) which can be spread by means of the connecting screw (7), are in particular arranged substantially parallel to one another, and are interconnected by a connecting portion (25).

10. Device (4) according to any of claims 1 to 9, **characterised in that** a bush element (11') is provided as the insert part (11), which bush element has an internal thread for connection to a corresponding external thread of the distance compensation element (8).

11. Device (4) according to claim 10, **characterised in that** the distance compensation element (8) has, at one end, a foot part (26) for abutting the holding element (5) and, at the other end, a head part (27) which has the external thread, the foot part (26) and the head part (27) being interconnected by a longitudinal portion (28) which has a smaller cross-sectional area than the foot part (26) and head part (27).

12. Structural element (1), in particular made of a fibre-reinforced plastic composite material, **characterised in that** the structural element (1) has at least one recess (13) into which a device (4) according to any of claims 1 to 11 is glued.

13. Structural element (1) according to claim 12, **characterised in that** the fastening portion (12) of the insert part (11) is arranged substantially completely within the recess (13) of the structural element (1).

14. Structural element (1) according to either claim 12 or claim 13, **characterised in that** a plate element (2), in particular a panel for aircraft monuments such as storage compartments, kitchens, toilets, washrooms and aircraft lining elements in passenger cabins, is provided, the fastening portion (12) of the insert part (11) being arranged between the outer surfaces (1') of the plate element (2).

15. Structural element (1) according to any of claims 12 to 14, **characterised in that** the holding element (5) has a nut, in particular a clip nut (6), for connection to the connecting screw (7).

## Revendications

1. Dispositif (4) pour la liaison d'un élément structurel (1), plus particulièrement constitué d'une matière plastique composite renforcée par des fibres, avec un élément de maintien (5) à une distance entre eux au moyen d'une vis de liaison (7), avec un élément de compensation de distance (8), qui comprend un perçage longitudinal (9) pour le passage de la vis de liaison (7) et avec un élément d'entraînement (16), disposé dans le perçage longitudinal (9), pouvant être relié par friction avec la vis de liaison (7), de façon à ce que l'élément de compensation de distance (8) puisse être mis, par rotation de la vis de liaison (7), dans une position de butée enjambant la distance entre l'élément structurel (1) et l'élément de maintien (5), l'élément de compensation de distance (8) étant relié, par l'intermédiaire d'une liaison filetée (10), avec une partie d'insertion (11), qui comprend une portion de fixation (12) pouvant être disposée à l'intérieur de l'élément structurel (1) pour le collage avec l'élément structurel (1), **caractérisé en ce que** la partie d'insertion (11) comprend, sur la portion de fixation (12), deux brides de fixation (17) disposées à une certaine distance entre elles, pour le collage de la partie d'insertion (11) avec l'élément structurel (1).

2. Dispositif (4) selon la revendication 1, **caractérisé en ce que** l'élément de compensation de distance (8) peut être déplacé, lors de la rotation de la vis de liaison (7), d'une position à distance en direction de l'élément de maintien (5) vers la position de butée sur l'élément de maintien (5).

3. Dispositif (4) selon la revendication 1 ou 2, **caractérisé en ce que** les deux brides de fixation (17) s'étendent chacune perpendiculairement à l'axe longitudinal du perçage longitudinal (9).

4. Dispositif (4) selon l'une des revendications 1 à 3, **caractérisé en ce qu'**au moins une des brides de fixation (17) comprend au moins une ouverture (17'), plus particulièrement au moins une encoche sur un bord externe de la bride de fixation (17), pour l'introduction de la colle entre les brides de fixation (17).

5. Dispositif (4) selon l'une des revendications 1 à 4, **caractérisé en ce que** des butées sont prévues pour la limitation du mouvement de l'élément de compensation de distance (8) dans la direction axiale par rapport à la partie d'insertion (11).

6. Dispositif (4) selon la revendication 5, **caractérisé en ce que** l'élément de compensation de distance (8) comprend une ouverture de logement (18) pour le logement amovible d'un élément de butée (19), avec lequel, dans l'état monté, une rotation de l'élément de compensation de distance (8) hors de la partie d'insertion (11) peut être bloquée, l'élément de butée (19) utilisé étant de préférence un élément d'étrier (19'), plus particulièrement en forme de U, qui dépasse, dans l'état monté, dans le perçage longitudinal (9) de l'élément de compensation de distance (8).

7. Dispositif (4) selon l'une des revendications 1 à 6, **caractérisé en ce que** l'élément d'entraînement (16) utilisé est un élément de ressort (16') pouvant être déformé élastiquement par la vis de liaison (7).

8. Dispositif (4) selon la revendication 7, **caractérisé en ce que** l'élément de ressort (16') est disposé de manière fixe en rotation dans une portion de maintien (23) de l'élément de compensation de distance (8) et de manière immobile dans la direction axiale.

9. Dispositif (4) selon la revendication 7 ou 8, **caractérisé en ce que** l'élément de ressort (16') comprend deux branches expansibles (24) pouvant être écartées au moyen de la vis de liaison (7), disposées plus particulièrement de manière globalement parallèle entre elles, qui sont reliées entre elles par l'intermédiaire d'une portion de liaison (25).

10. Dispositif (4) selon l'une des revendications 1 à 9, **caractérisé en ce que** la partie d'insertion (11) utilisée est un élément de douille (11') qui comprend un filetage interne pour une liaison avec un filetage externe correspondant de l'élément de compensation de distance (8).

11. Dispositif (4) selon la revendication 10, **caractérisé en ce que** l'élément de compensation de distance (8) comprend, à une extrémité, une partie de pied (26) pour un appui contre l'élément de maintien (5) et à l'autre extrémité une partie de tête (27) avec le filetage externe, la partie de pied (26) et la partie de tête (27) étant reliées entre elles par l'intermédiaire d'une portion longitudinale (28) avec une surface de section plus faible par rapport à la partie de pied (26) et à la partie de tête (27).

12. Élément structurel (1), plus particulièrement constitué d'une matière plastique composite renforcée par des fibres, **caractérisé en ce que** l'élément structurel (1) comprend au moins un évidement (13) dans lequel un dispositif (4) selon l'une des revendications 1 à 11 est collé.

13. Élément structurel (1) selon la revendication 12, **caractérisé en ce que** la portion de fixation (12) de la partie d'insertion (11) est disposée globalement entièrement à l'intérieur de l'évidement (13) de l'élément structurel (1).

14. Élément structurel (1) selon la revendication 12 ou 13, **caractérisé en ce qu'**un élément de plaque (2), plus particulièrement un panneau pour des éléments d'avions comme des compartiments de rangement, des cuisines, des toilettes, des sanitaires ainsi que des éléments carénages d'avions dans des cabines de passagers, est prévu, la portion de fixation (12) de la partie d'insertion (11) étant disposée entre les surfaces externes (1') de l'élément de plaque (2).

15. Élément structurel (1) selon l'une des revendication 12 à 14, **caractérisé en ce que** l'élément de maintien (5) comprend un écrou, plus particulièrement un écrou à clip (6), pour la liaison avec la vis de liaison (7).
